# EUROPÄISCHE PATENTSCHRIFT

(11) **EP 1 382 632 B1**
(45) Veröffentlichungstag und Bekanntmachung des Hinweises auf die Patenterteilung: **27.06.2007**
(21) Anmeldenummer: 03015133.6
(22) Anmeldetag: 04.07.2003
(51) Int. Cl.: C08G 77/46, C08G 77/38, B01D 19/04

(54) **Organopolysiloxane zur Entschäumung wässriger Systeme**
Organopolysiloxanes for defoaming of aqueous systems
Anti-mousse à base d'organopolysiloxane pour des systèmes aqueux

(30) Priorität: 16.07.2002 DE 10232115
(43) Veröffentlichungstag der Anmeldung: 21.01.2004
(73) Patentinhaber: Goldschmidt GmbH, 45127 Essen (DE)
(72) Erfinder: Knott, Wilfried, Dr., 45141 Essen (DE); Lehmann, Kathrin, 51377 Leverkusen (DE); Lüger, Martina, 45356 Essen (DE); Silber, Stefan, Dr., 47804 Krefeld (DE)

(56) Entgegenhaltungen:
- DE-C- 4 343 235
- US-A- 5 474 709
- US-A- 5 620 485
- US-B1- 6 391 831

## Beschreibung

Die Erfindung betrifft die Verwendung von Organopolysiloxancopolymeren als Entschäumer für wässrige Beschichtungssysteme und Druckfarben.

Immer mehr Lacke und Druckfarben werden auf ökologisch unbedenklichere wasserbasierende Formulierungen umgestellt.

Diese haben aufgrund der eingesetzten Rezepturbestandteile - Emulgatoren, Netzmittel, Dispergierzusätze - eine starke Tendenz zur Schaumstabilisierung. Dies macht sich nicht nur bei der Herstellung dieser Farben negativ bemerkbar, sondern besonders bei der Applikation, wenn hohe Luftmengen eingetragen werden und Ästhetik und Materialeigenschaften finaler Beschichtungen negativ beeinträchtigt werden. Daher ist der Einsatz von Antischaummitteln oder Entschäumern in nahezu allen wasserbasierenden Systemen weit verbreitet und oft unerlässlich.

In der Vergangenheit sind eine Vielzahl an Formulierungen beschrieben worden, die den Einsatz von zum Beispiel Silikonölen, organomodifizierten Siloxanen, hydrophoben Polyoxyalkylenen, Mineralölen, nativen Ölen und anderen hydrophoben Flüssigkeiten als entschäumende Substanzen vorsehen. Häufig werden auch Kombinationen der oben genannten Substanzen mit hydrophoben Feststoffen, wie zum Beispiel Kieselsäuren, Metallstearaten oder Fettsäureamiden eingesetzt, die vielfach den schaumhemmenden oder entschäumenden Effekt verstärken.

Die Verwendung von Siliconölen, insbesondere Dimethylpolysiloxanen niedriger bis mittlerer Viskosität für die Entschäumung wässriger Lösungen oder Dispersionen ist bekannt und beispielsweise in dem Buch W. Noll "Chemie und Technologie der Silicone" beschrieben.

Es ist ebenfalls bekannt, Polyoxyalkylen-Polysiloxan-Copolymerisate als Entschäumungsmittel zu verwenden. In der US-A-3 763 021 ist eine typische Zubereitung zur Entschäumung wässriger Latices beschrieben, welche aus
(1) 1 bis 20 Gew.-% eines Siloxanglycolcopolymeren der allgemeinen Formel 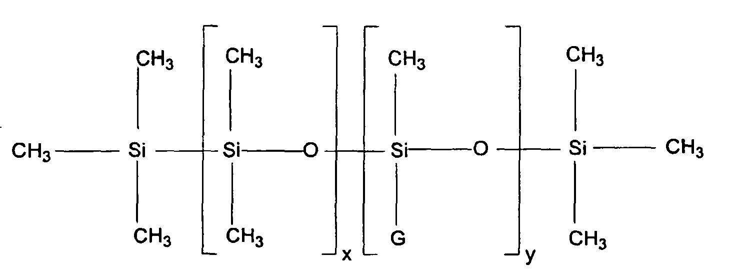 bestehen,
   worin
   - x: einen durchschnittlichen Wert von 6 bis 420 und
   - y: einen durchschnittlichen Wert von 3 bis 30 hat und
   - G: einen Rest der Struktur
   - D(OR)_{z}A bedeutet,
   worin
   D ein Alkylenrest ist,
   R aus Ethylenresten und Propylen- oder Butylenresten in einem solchen Verhältnis von Ethylen- zu den anderen Alkylenresten zusammengesetzt ist, dass das Verhältnis von Kohlenstoffatomen zu Sauerstoffatomen in sämtlichen Blöcken OR im Bereich von 2,3 : 1 bis 2,8 : 1 liegt,
   z einen durchschnittlichen Wert von 25 bis 100 hat und
   A eine Abschlussgruppe ist,
(2) 65 bis 98 Gew.-% Polypropylenglycol mit einem mittleren Molekulargewicht im Bereich von 1.000 bis 2.000 und
(3) 1 bis 15 Gew.-% eines hydrophoben Siliciumdioxides besteht.

Typische Herstellungsmethoden dieser vorgenannten Polyoxyalkylen-Polysiloxan-Copolymeren sind in den US-A-3 402 192, US-A-3 746 653, US-A-3 784 479 und US-A-3 865 544 beschrieben.

Nach derzeitigem Stand des Wissens ist für die entschäumende Wirkung entscheidend, dass ein Entschäumer die Schaumlamellen penetrieren kann und diese damit labilisiert, bis sie zerplatzen (K. Koczo, J.K. Koczone, D.T. Wasan, J. Colloid Interface Sci. 166, 225 bis 238 (1994)). Um dies zu erreichen ist eine kontrollierte Inkompatibilität (Hydrophobie) mit der zu entschäumenden wässrigen Phase notwendig. Denn wenn ein Entschäumer zu kompatibel (hydrophil) ist, wird er nicht sehr wirksam sein können, da er nicht bevorzugt in die Schaumlamelle eindringt. Bei zu großer Inkompatibilität ist die Entschäumung im Regelfall zwar sehr gut, aber nicht selten treten dann als unerwünschte Nebeneffekte Oberflächenstörungen, Beeinträchtigungen im Benetzungsverhalten und Separationserscheinungen auf.

Somit ist die Suche nach einem geeigneten Entschäumer stets eine Suche nach der richtigen Inkompatibilitäts-/Kompatibilitätsbalance für das zu entschäumende System, mit dem Ziel, dass das angestrebte Hydrophobie-/Hydrophiliegleichgewicht möglichst optimal erreicht wird. Das kontinuierliche Bestreben, VOC (volatile organic component)-Werte zu reduzieren, sowie der Wunsch durch schwerflüchtige Mineralöle oder klassische Weichmacher hervorgerufene Fogging-Probleme von Innenwandfarben durch bessere Rezeptierung zu vermeiden, haben dazu geführt, dass eine Vielzahl traditioneller Produktkonzepte zur Entschäumung wässriger Beschichtungssysteme heute ungeeignet erscheinen.

Die DE-A-40 32 006 lehrt ein Verfahren zum Entschäumen und/oder Entgasen organischer Systeme durch Zugabe eines ein Organopolysiloxan enthaltenden Antischaummittels zum organischen System, welches aus Dieselöl oder Rohöl oder Crackprodukten hiervon gebildet sein kann. Als Organopolysiloxan wird ein Polymer verwendet, welches aus Siloxaneinheiten der allgemeinen Formeln

RₐSiO_{(4-a)/2} und R_{b}A_{c}SiO _{4-(b+c)/2}

besteht. wobei
- R: ein einwertiger Kohlenwasserstoffrest mit 1 bis 18 Kohlenstoffatom(en) je Rest bedeutet,
- A: ein Rest der allgemeinen Formel 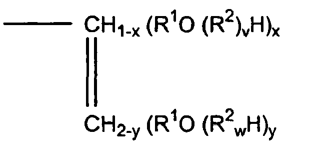 ist, worin
R¹ einen Rest der Formel
-CR³H- bedeutet,
R³ Wasserstoff oder einwertiger organischer Rest,
R einen Rest der Formel-CR⁴H-CH₃ oder -(CH₂)₃ bedeutet,
R⁴ Wasserstoff oder einwertiger organischer Rest,
v, w eweils 0 oder eine ganze Zahl, wobei v + w durchschnittlich 0 bis 16 ist,
x, y 0 oder 1, wobei x + y 1 oder 2 ist,
- a: 1,2 oder 3,
- b: 0,1 oder 2 und
- c: 1 oder 2, wobei die Summe b + c nicht größer als 3 ist.

Die verwendeten Siloxanyl-alkendiyl -bis-ω-hydroxypolyoxyalkylene selbst und ihre Herstellung sind in der Patentschrift DD-A-2 55 737 beschrieben.

Anlagerungsprodukte von Alkindiolderivaten an wasserstofffunktionelle Siloxane sind somit bekannt.

Aus der DE-A-195 16 30 sowie DE-A-43 43 235 sind überdies Derivate bekannt, die neben den Alkindiol(alkoxylaten) auch noch andere, bespielsweise Polyetherreste zur Derivatisierung der Wasserstoffsiloxane beschreiben. Auch diese Copolymere werden zur Entschäumung unpolarer Phasen, wie Dieselkraftstoffe angewendet.

Der vorliegenden Erfindung liegt allerdings die Aufgabe zugrunde, für die Entschäumung wässriger Medien besonders geeignete Organopolysiloxane bereitzustellen, die es ermöglichen, die oben beschriebene gewünschte Inkompatibilitäts-/Kompatibilitätsbalance gezielt einzustellen, hierbei deutlich verbesserte Balancen zu gestatten sowie einen deutlich rascheren Schaumzusammenbruch zu gewährleisten.

Diese Aufgabe wird überraschenderweise durch die Verwendung wasserunlöslicher Organopolysiloxanderivate der allgemeinen Formel (I) zur Entschäumung wässriger Medien gelöst: 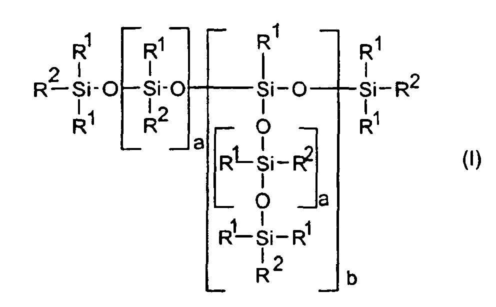 wobei die Reste
- R¹: Alkylreste mit 1 bis 4 Kohlenstoffatomen oder Arylreste sind, jedoch mindestens 80 % der Reste R¹ Methylreste sind,
- R²: im Molekül gleich oder verschieden sind und nachfolgende Bedeutungen haben können
(a) 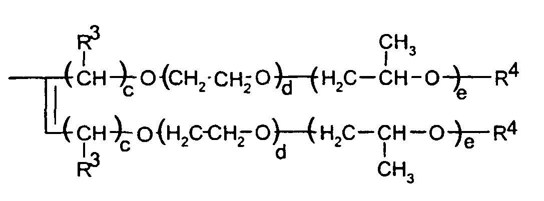 worin
   R³ ein Wasserstoff- oder Alkylrest,
   R⁴ ein Wasserstoff-, Alkyl- oder Carboxylrest,
   c eine Zahl von 1 bis 20,
   d eine Zahl von 0 bis 50,
   e eine Zahl von 0 bis 50 ist oder
(b)
   - (CH₂-)_{f}OR⁵,
   worin
   R⁵ ein Wasserstoff-, Alkyl-, Carboxyl- oder ein gegebenenfalls Ethergruppen enthaltender Dimethylolpropanrest,
   f eine Zahl von 2 bis 20 ist oder
c)

   -(CH₂-)_{g}(OC₂H₄-)ₕ(OC₃H₆-)ᵢ(OC₄H₈)ⱼ(OCH₂CH(C₆H₅))ₖOR⁶

   worin
   R⁶ ein Wasserstoff-, Alkyl- oder Carboxylrest,
   g eine Zahl von 2 bis 6,
   h eine Zahl von 0 bis 20,
   i eine Zahl von 1 bis 50,
   j eine Zahl von 0 bis 10,
   k eine Zahl von 0 bis 10 ist oder
(d)
   dem Rest R¹ entspricht,
   mit der Maßgabe, dass im durchschnittlichen Molekül mindestens ein Rest R² die Bedeutung (a) hat,
- a: eine Zahl von 1 bis 500, vorzugsweise 1 bis 200 und insbesondere 1 bis 50,
- b: eine Zahl von 0 bis 10, vorzugsweise < 5 und insbesondere 0 ist.

Das Siloxangerüst kann geradkettig (b = 0) oder aber verzweigt sein (> 0 bis 10). Der Wert von b wie auch der Wert von a sind als durchschnittliche Werte im Polymermolekül zu verstehen, da die erfindungsgemäß zu verwendenden Polysiloxane in Form von - im Regelfall - equilibrierten Gemischen vorliegen. Es ist dem Fachmann geläufig, dass die Verbindungen aufgrund ihrer polymeren Natur in Form eines Gemisches mit einer im wesentlichen durch statistische Gesetze geregelten Verteilung vorliegen. Die Werte für alle Indices stellen deshalb Mittelwerte dar.

Die Reste R¹ sind Alkylreste mit 1 bis 4 Kohlenstoffatomen, wie Methyl-, Ethyl-, Propyl- oder Butylreste, oder Arylreste, wobei die Phenylreste bevorzugt sind. Herstellungs- und preisbedingt sind die Methylreste bevorzugt, so dass mindestens 80 % der Reste R¹ Methylreste sind. Besonders bevorzugt sind solche Polysiloxane, bei denen alle Reste R¹ Methylreste sind.

R² kann im Molekül gleich oder verschieden sein mit der Maßgabe, dass im durchschnittlichen Molekül mindestens ein Rest R² die Bedeutung (a) hat. Die Reste R² sind im folgenden näher spezifiziert.

Im Rest (a) 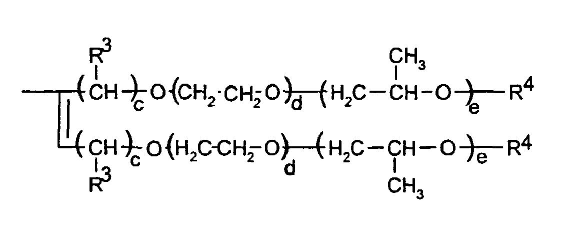 ist
- R³: ein Wasserstoff- oder Alkylrest, insbesondere ein niederer Alkylrest mit 1 bis 4 Kohlenstoffatomen. Bevorzugt ist der Wasserstoffrest.
- R⁴: ist ein Wasserstoff-, Alkyl- oder Carboxylrest, insbesondere ein Acylrest. In einer besonderen Ausführungsform ist R⁴ ein Wasserstoffrest. Der Index
- c: ist eine Zahl von 1 bis 20, vorzugsweise 1. Die Indices
- d und e: sind unabhängig voneinander ganze Zahlen von 0 bis 50. Bevorzugt ist ein Rest (a), bei dem R³ und R⁴ Wasserstoffreste sind, der Index c gleich 1 und die Indices d und e unabhängig voneinander jeweils 0 bis 10 sind. Bei diesen Indices handelt es sich - wie dem Fachmann geläufig - um durchschnittliche Zahlen, da es bekannt ist, dass bei der Anlagerung von Alkylenoxiden wie Ethylenoxid und Propylenoxid an Alkohole ein Gemisch von Verbindungen unterschiedlicher Kettenlänge erhalten wird. Diese Reste (a) können in das Molekül des Polysiloxans durch Addition entsprechend substituierter Alkinderivatvorstufen an SiH-Gruppen eines Polysiloxans dem Stand der Technik entsprechend in Anwesenheit eines Hydrosilylierungskatalysators eingeführt werden.

Im Rest (b)

- (CH₂-)_{f}OR⁵

ist
- R⁵: ein Wasserstoff-, Alkyl-, Carboxyl- oder ein gegebenenfalls Ethergruppen enthaltender Dimethylolpropanrest. Bevorzugt ist R⁵ ein Wasserstoffrest oder ein Dimethylolpropanderivat. Der Index
- f: ist eine einfache Zahl von 2 bis 20, wobei die Zahlenwerte 3 bis 6 bevorzugt sind. Diese Reste (b) können mittels einer wie zuvor bereits beschriebenen Hydrosilylierungsreaktion durch Addition von Alkenolen oder ihrer Derivate an SiH-Gruppen des Organopolysiloxans eingeführt werden. Beispiele für solche Alkenole sind Allylalkohol, Hexenol oder beispielsweise Trimethylolpropanmonoallylether.

Im Rest (c)

-(CH₂-)_{g}(OC₂H₄-)ₕ(OC₃H₆-)ᵢ(OC₄H₈)ⱼ (OCH₂ CH(C₆H₅)) ₖOR⁶

ist
- R⁶: ein Wasserstoff-, Alkyl- oder Carboxylrest. Vorzugsweise ist R⁶ ein Wasserstoff- oder Methylrest. Der Index
- g: ist eine Zahl von 2 bis 6, der Index
- h: eine Zahl von 0 bis 20, der Index
- i: eine Zahl von 1 bis 50, der Index
- j: eine Zahl von 0 bis 10 und der Index
- k: eine Zahl von 0 bis 10.
Vorzugsweise hat der Index g einen Wert von 3, der Index h einen Wert von 0 bis 12 und der Index i einen Wert von 8 bis 30, die Indices j und k sind vorzugsweise < 5, insbesondere 0.

Auch die Reste (c) können mittels einer wie oben bereits beschriebenen Hydrosilylierungsreaktion durch Addition von Alkenylpolyethern oder ihrer Derivate an SiH-Gruppen des Organopolysiloxans eingeführt werden.

Alternativ (d) kann der Rest R² auch dem Rest R¹ entsprechen, wobei wiederum der Methylrest besonders bevorzugt ist.

Die Verbindungen der allgemeinen Formel (I) sind technische Produkte, deren Inkompatibilität mit der zu entschäumenden wässrigen Phase (Hydrophobie) gezielt über die Art (Struktur) der Einzelkomponenten bzw. deren Fragmente und deren relativen Anteile am Gesamtmolekül so gesteuert wird, dass die Reaktionsprodukte wasserunlöslich sind, d. h. nicht mehr als 20 g/l, vorzugsweise < 10 g/l und insbesondere weniger als ca. 5 g/l in Wasser klar löslich sind.

Die wesentlichen Zusammenhänge hinsichtlich Struktur/Hydrophilie/Hydrophobie sind dem Fachmann auf dem Gebiet der Grenzflächenchemie ebenso bekannt wie die entsprechenden Syntheseverfahren. Optimierungen sind daher anhand einiger orientierender Versuche möglich.

In den folgenden Beispielen wird zunächst die Herstellung von erfindungsgemäß zu verwendenden organofunktionell modifizierten Organopolysiloxanen der Formel I gezeigt.

Die in diesen Beispielen hergestellten Produkte werden mit E1 bis E7 bezeichnet.

### Beispiel E1

In einem 250-ml-Vierhalskolben, ausgerüstet mit KPG-Rührer, Tropftrichter, Intensivkühler und Stickstoffüberleitung werden 51,15 g Golpanol® BEO (Butindiol mit ca. 1,1 Mol Ethylenoxyd verethert) zusammen mit 11,0 g eines seitständigen Wasserstoffsiloxans (SiH-Gehalt: 4,62 Val/kg) unter Rühren auf 140 °C erhitzt und mit einem Katalysator bestehend aus H₂PtCl₆•6H₂O und RuCl₃•H₂O in Isopropanol (entsprechend 10 ppm Pt und 10 ppm Ru bezogen auf den Gesamtansatz) versetzt. Innerhalb weniger Minuten setzt die SiC-Verknüpfungsreaktion ein, die man durch sukzessives Zutropfen der Hauptmenge an SiH-Siloxan (44 g) für ca. 50 bis 60 Minuten noch in ihrer Exothermie steigert. Bereits nach ca. 20 Minuten belegt die Gasvolumetrie einer gezogenen Probe einen quantitativen SiH-Umsatz.
Man isoliert eine klare, bernsteinfarbene Flüssigkeit mit einer Viskosität von 639 mPas bei 25 °C.

### Beispiel E2

Analog dem Vorgehen von Beispiel 1 werden 42,52 g Golpanol BEO gemeinsam mit 12,0 g eines seitständigen Wasserstoffsiloxans (SiH-Gehalt: 3,52 Val/kg) unter Rühren auf 140 °C erhitzt und mit einem Katalysator bestehend aus H₂PtCl₆•6H₂O und RuCl₃•H₂O in Isopropanol (entsprechend 10 ppm Pt und 10 ppm Ru bezogen auf den Gesamtansatz) versetzt. Binnen 60 Minuten tropft man die Restmenge an SiH-Siloxan (48 g) zu. Bei Zutropfende ist der gasvolumetrisch bestimmte SiH-Umsatz quantitativ.
Man gewinnt nach Erkalten des Reaktionsansatzes eine klare, bernsteinfarbene Flüssigkeit mit einer Viskosität von 896 mPas bei 25 °C.

### Beispiel E3

In Anlehnung an das in Beispiel 1 geübte Vorgehen werden 42,39 g Golpanol BEO zusammen mit 12 g eines seitständigen Wasserstoffsiloxans (SiH-Gehalt: 3,51 Val/kg; Kettenlänge: 20, Funktionalisierungsgrad: 5) unter Rühren auf 140 °C erhitzt und mit einer Katalysatorlösung bestehend aus H₂PtCl₆•6H₂O und RuCl₃•H₂O in Isopropanol (entsprechend 10 ppm Pt und 10 ppm Ru bezogen auf den Gesamtansatz) versetzt.
Nach Zugabe der Hauptmenge an Wasserstoffsiloxan (48 g) ist der Ansatz klar und weist keinerlei gasvolumetrisch erfassbaren SiH-Wasserstoff auf. Die Viskosität des honigfarbenen Golpanol-BEO-Siloxan-Copolymeren liegt bei 1.717 mPas bei 25 °C.

### Beispiel E4

Zur Herstellung eines ABA-strukturierten, Golpanol-BEO-Siloxan-Blockcopolymeren werden in Analogie zu Beispiel E1 39,51 g Golpanol BEO zusammen mit 13,0 g eines α, ω -Dihydrogenpolydimethylsiloxans (SiH-Gehalt: 3,02 Val/kg, Kettenlänge: 9,1) bei 140 °C unter Rühren vorgelegt und mit einer Katalysatorlösung bestehend aus H₂PtCl₆·6H₂O und RuCl₃·H₂O in Isopropanol (entsprechend 10 ppm Pt und 10 ppm Ru bezogen auf den Gesamtansatz) versetzt. Im Verlauf einer Stunde wird die Hauptmenge des linearen Wasserstoffsiloxans (52 g) hinzugetropft, wobei sich bereits am Ende der Dosierung ein quantitativer SiH-Umsatz ergibt.
Nach Erkalten erhält man eine klare, bernsteinfarbene Flüssigkeit mit einer Viskosität von 207 mPas bei 25 °C.

### Beispiel E5

In einem 250-ml-Vierhalskolben, ausgerüstet mit KPG-Rührer, Tropftrichter, Intensivkühler und Stickstoffüberleitung werden 42,31 g Golpanol BEO zusammen mit 50,0 g eines seitständigen Wasserstoffsiloxans (SiH-Gehalt: 4,67 Val/kg) und 8,62 g eines Allylpolyethers (M : 382 g/mol) unter Rühren auf 120 °C erhitzt und mit 25 ppm Karstedt-Katalysator versetzt. Innerhalb von 85 Minuten nach Katalysatorzugabe erreicht der Reaktionsansatz quantitativen SiH-Umsatz.
Isoliert wird eine klare, bernsteingelbe Flüssigkeit.

### Beispiel E6

In einer inertisierten Apparatur analog Beispiel E5 werden 36,28 g Golpanol BMP (monopropoxyliertes Diol) zusammen mit 13 g eines seitständigen Wasserstoffsiloxans (SiH-Gehalt: 3,52 Val/kg) bei 135 °C unter Rühren vorgelegt und mit einer Katalysatorlösung bestehend aus H₂PtCl₆•6H₂O und RuCl₃•H₂O in Isopropanol (entsprechend 10 ppm Pt und 10 ppm Ru bezogen auf den Gesamtansatz) versetzt. Im Verlauf einer Stunde werden die restlichen 52 g des Wasserstoffsiloxans zugetropft. Nach 70 Minuten erreicht der klare Reaktionsansatz quantitativen SiH-Umsatz.
Erhalten wird ein gelbes Copolymer.

### Beispiel E7

In einem 250-ml-Vierhalskolben, ausgerüstet mit KPG-Rührer, Tropftrichter, Intensivkühler und Stickstoffüberleitung werden 50,0 g eines seitständigen Wasserstoffsiloxans (SiH-Gehalt: 4,67 Val/kg) unter Rühren bei 140 °C vorgelegt und mit einer Katalysatorlösung bestehend aus H₂PtCl₆•6H₂O und RuCl₃•H₂O in Isopropanol (entsprechend 10 ppm Pt und 10 ppm Ru bezogen auf den Gesamtansatz) versetzt. Innerhalb von 20 Minuten werden 40,34 g Trimethylolpropanmonoallyletherdiacetat und dann binnen 15 Minuten 15,65 g Golpanol BEO hinzugetropft. Nach Zutropfende wird der Ansatz 1 Stunde unter Rühren bei Reaktionstemperatur gehalten. Eine gasvolumetrische SiH-Bestimmung belegt einen SiH-Umsatz von 99,2 %.
Das klar-gelbe Produkt stellt eine Flüssigkeit mit einer Viskosität von 279 mPas dar.

Beispiele für erfindungsgemäß zu verwendende Organopolysiloxane sind Produkte mit den folgenden, durchschnittlichen Strukturen: 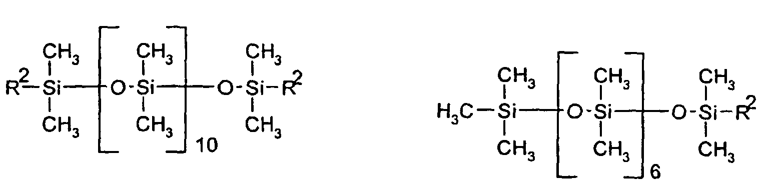 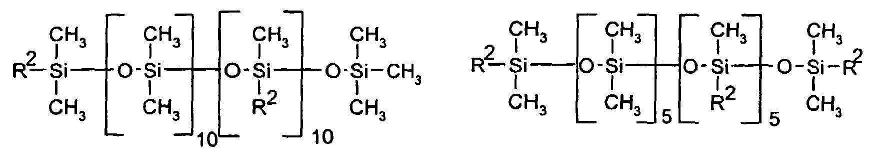 wobei
- R²: bespielsweise jeweils dem Rest 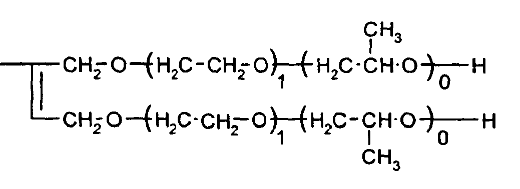
entspricht.

Die erfindungsgemäß zu verwendenden Organopolysiloxane können beispielsweise zur Entschäumung von Polymerdispersionen, Lacken und Druckfarben eingesetzt werden.

Für die erfindungsgemäße Verwendung als Entschäumer wässriger Medien können diese Organopolysiloxane direkt in Konzentrationen von 0,01 bis 3,0 Gew.-% den zu entschäumenden wässrigen Systemen zugesetzt werden. Es ist allerdings auch möglich, dass diese Derivate vorab formuliert werden, beispielsweise anorganische oder organische feste Substanzen wie Kieselsäuren, Aluminiumoxid, Erdalkalimetallcarbonate, Erdalkalimetallsalze langkettiger Fettsäuren, deren Amide oder Harnstoffderivate in diesen Siloxanen dem Stand der Technik entsprechend dispergiert werden. Die erfindunsgemäß zu verwendenden Entschäumer können auch in Form ihrer wässrigen Emulsionen verwendet werden. Emulsionen werden häufig bevorzugt eingesetzt, da diese besser zu dosieren sind und Tröpfchenverteilungen voreingestellt sind. Dabei sind Entschäumeremulsionen, deren mittlerer Teilchendurchmesser zwischen 1 und 10 µm liegt, besonders bevorzugt. Solche Emulsionen können dann zwischen 5 und 50 Gew.-% der erfindungsgemäß zu verwendenden Komponenten enthalten.

Auch können diese erfindungsgemäß zu verwendenden Organopolysiloxane natürlich mit anderen dem Stand der Technik entsprechenden Entschäumerölen wie beispielsweise Siliconölen, Polyethersiloxanen. Fettalkohol- oder Fettsäurederivaten oder Polyethern zusammen formuliert werden.

Die Erfindung wird nachfolgend anhand von Ausführungsbeispielen näher erläutert. Dazu werden die erfindungsgemäß zu verwendenden Organopolysiloxane E1 bis E7 sowie die Vergleichsentschäumer V8 Tego® Foamex 810 (Degussa), V9 Dehydran® 1293 (Lösung eines Polyethersiloxan-Copolymers; Cognis) und V10 Surfynol® 104 (Tetramethyldecindiol; Air Products) untersucht.

Zur Überprüfung der anwendungstechnischen Eigenschaften der verschiedenen erfindungsgemäßen oder erfindungsgemäß zu verwendenden Verbindungen werden die folgenden Prüfsysteme verwendet, wobei sich die Mengenangaben auf Gew.-% beziehen:

### Wässrige Prüfsysteme:

### 1.) Uni-Wasser-Basislack

| | | |
|---|---|---|
| Daotan VTW 6462 | 26,0 | Dispersion eines Urethan-Acrylat-Hybrides (Solutia) |
| Wasser | 10,0 | |
| AMP 90 | 0,2 | Aminomethylpropanol (Angus) |
| Viskalex HV 3 | 1,6 | Acrylatverdicker |
| Wasser | 30,0 | |
| Schwarzdye | 4,4 | |
| Viacryl VSC 6254 | 5,8 | Styrolacrylatdispersion (Solutia) |
| Wasser | 21,8 | |

Je 0,2 Gew.-% der erfindungsgemäßen und nicht-erfindungsgemäßen Entschäumer werden als letzter Rezepturbestandteil mit einer Lochscheibe 2 Minuten bei 1.000 Upm eindispergiert. 45 g des Lackes werden sodann in einen Meßzylinder gegossen, Schaumhöhe in ml sowie die Zeit des Zusammenbruches bis zu einem Restschaumvolumen von < 1 ml bestimmt. Anschließend wird das restliche Lackmaterial dem Stand der Technik entsprechend auf einen KTL-Grund appliziert, wobei nach einer Ablüftzeit von 10 Minuten bei Raumtemperatur zunächst 10 Minuten bei 80 °C und abschließend 20 Minuten bei 140 °C eingebrannt wird. Die trockene Beschichtung wird visuell auf Oberflächenstörungen hin getestet. Die Beurteilung erfolgt nach einer Skala von 1 bis 6, wobei die Note 1 einen störungsfreien Film beschreibt, während die Note 6 von starken Benetzungsstörungen zeugt.

### 2.) Füllerrezeptur

| | | |
|---|---|---|
| Resydrol VAZ | | |
| 5541W/42WA | 23,0 | Alkydharz (Solutia) |
| Dispers 750 W | 1,5 | Dispergieradditiv (Tego) |
| Butylglykol | 1,5 | |
| N-Methyl- | | |
| pyrrolidon | 1,0 | |
| Kronos 2190 | 14,0 | Titandioxid (Kronos) |
| Blancfixemicro | 14,0 | Füllstoff (Omya) |
| Printex U | 0,2 | Ruß (Degussa) |
| Resydrol VAZ | | |
| 5541W/42WA | 42,5 | Alkydharz (Solutia) |
| Wasser | 2,0 | |

Je 0,3 Gew.-% der erfindungsgemäßen und nicht-erfindungsgemäßen Entschäumer werden als letzter Rezepturbestandteil mit einer Zahnradscheibe 3 Minuten bei 3.000 Upm eindispergiert. 45 g des Lackes werden sodann in einen Meßzylinder gegossen, Schaumhöhe in ml sowie die Zeit des Schaumzusammenbruches bis zu einem Restschaumvolumen von < 1 ml bestimmt. Anschließend wird das restliche Lackmaterial dem Stand der Technik entsprechend auf einem KTL-Grund appliziert, wobei nach einer Ablüftzeit von 10 Minuten bei Raumtemperatur zunächst 10 Minuten bei 80 °C und abschließend 25 Minuten bei 160 °C eingebrannt wird. Die trockene Beschichtung wird wie vorstehend beschrieben visuell beurteilt.

### 3) Überdrucklack:

| | | |
|---|---|---|
| Joncryl 8085 | 39,8 | Styrolacrylatlösung (Johnson Polymer) |
| Joncryl 90 | 35,9 | Styrolacrylatdispersion (Johnson Polymer) |
| Joncryl 77 | 9,7 | Acrylatemulsion (Johnson Polymer) |
| Jonwax 35 | 4,9 | Polyethylenwachsemulsion (Johnson Polymer) |
| Butylglycol | 4,9 | |
| Wasser | 3,9 | |

Der Drucklack wird gemäß vorstehender Rezeptur formuliert. Als letzter Rezepturbestandteil werden je 0,2 Gew.-% der erfindungsgemäßen und nicht-erfindungsgemäßen Entschäumer hinzugegeben, wobei die Einarbeitung mittels einer Perlmillscheibe 3 Minuten bei 1.500 Upm erfolgt. Anschließend werden wiederum 45 g in einen Standzylinder eingewogen und die Schaumhöhe in ml angegeben. Die Zeit bis zu einer Schaumhöhe < 1 ml wird gemessen. Anschließend wird der restliche Drucklack mit einem 12 µ Spiralrakel auf einer transparenten PVC-Folie aufgerakelt. Durch den Entschäumer hervorgerufene, etwaige Benetzungsstörungen werden wie vorstehend beschrieben auf einer Skala von 1 bis 6 bewertet.

### Prüfsystem 1:

### (Uni-Wasser-Basislack)

| Verbindung | Schaumhöhe in ml/45 g | Zeit des Schaumzerfalls in Sek. | Benetzungsverhalten (Skala 1-6) |
|---|---|---|---|
| - | 77 | > 1.000 | 2 |
| E1 | 48 | 5 | 1 |
| E2 | 45 | 5 | 1 |
| E3 | 47 | 5 | 1 |
| E4 | 47 | 5 | 1 |
| E5 | 48 | 3 | 1 |
| E6 | 45 | 5 | 2 |
| E7 | 45 | 3 | 1 |
| Surfynol 104 | 54 | 20 | 2 |
| Foamex 810 | 45 | 15 | 5 |
| Dehydran 1293 | 57 | 150 | 4 |

### Prüfsystem 2:

### (Füller)

| Verbindung | Schaumhöhe in ml/45 g | Zeit des Schaumzerfalls in Sek. | Benetzungsverhalten (Skala 1-6) |
|---|---|---|---|
| - | 78 | > 500 | 2 |
| E1 | 50 | 10 | 1 |
| E2 | 49 | 5 | 1 |
| E3 | 47 | 5 | 1 |
| E4 | 51 | 15 | 1 |
| E5 | 53 | 3 | 1 |
| E6 | 49 | 5 | 2 |
| E7 | 47 | 5 | 2 |
| Surfynol 104 | 53 | 60 | 3 |
| Foamex 810 | 49 | 100 | 5 |
| Dehydran 1293 | 54 | 220 | 3 |

### Prüfsystem 3:

### (wässriger Überdrucklack)

| Verbindung | Schaumhöhe in ml/45 g | Zeit des Schaumzerfalls in Sek. | Benetzungsverhalten (Skala 1-6) |
|---|---|---|---|
| - | 82 | > 2000 | 2 |
| E1 | 48 | 20 | 1 |
| E2 | 51 | 15 | 2 |
| E3 | 46 | 5 | 1 |
| E4 | 49 | 10 | 1 |
| E5 | 50 | 5 | 1 |
| E6 | 49 | 5 | 2 |
| E7 | 47 | 5 | 1 |
| Surfynol 104 | 47 | 50 | 2 |
| Foamex 810 | 45 | 50 | 5 |
| Dehydran 1293 | 54 | 100 | 3 |

Wie aus den vorstehend beschriebenen Prüfergebnissen ersichtlich ist, zeichnen sich die erfindungsgemäß zu verwendenden Siloxanderivate durch eine gute Schaumunterdrückung gepaart mit außerordentlich rascher Schaumzerstörung aus, ohne dass die von anderen Entschäumern hervorgerufenen Benetzungsdefekte auftreten. Hiermit wird demgemäß eine neuartige Kompatibilitäts-/Inkompatibiltätsbalance erreicht, wie sie bislang mit dem Stand der Technik entsprechenden Entschäumern nicht erreicht werden konnte.

## Patentansprüche

1. Verwendung wasserunlöslicher Organopolysiloxanderivate der allgemeinen Formel (I) 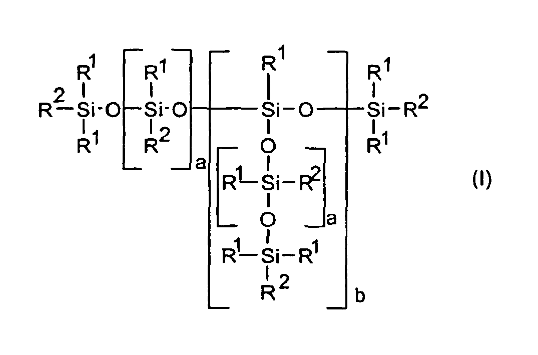 worin die Reste
R¹ Alkylreste mit 1 bis 4 Kohlenstoffatomen oder Arylreste sind, jedoch mindestens 80 % der Reste R¹ Methylreste sind,
R² im Molekül gleich oder verschieden sind und nachfolgende Bedeutungen haben können
(a) 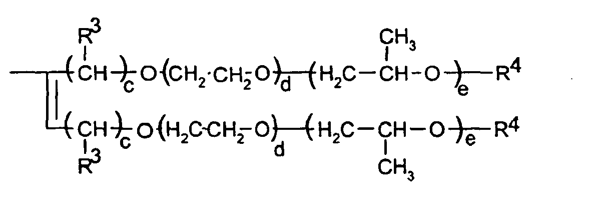 worin
R³ ein Wasserstoff- oder Alkylrest,
R⁴ ein Wasserstoff-, Alkyl- oder Carboxylrest,
c eine Zahl von 1 bis 20,
d eine Zahl von 0 bis 50,
e eine Zahl von 0 bis 50 ist
oder
(b)
-(CH₂-)_{f}OR⁵,
worin
R⁵ ein Wasserstoff-, Alkyl-, Carboxyl- oder ein gegebenenfalls Ethergruppen enthaltender Dimethylolpropanrest,
f eine Zahl von 2 bis 20 ist
oder
(c)
- (CH₂-)_{g}(OC₂H₄-)ₕ(OC₃H₆-)ᵢ(OC₄H₈)ⱼ(OCH₂CH (C₆H₅))ₖOR⁶
worin
R⁶ ein Wasserstoff-, Alkyl- oder Carboxylrest,
g eine Zahl von 2 bis 6,
h eine Zahl von 0 bis 20,
i eine Zahl von 1 bis 50,
j eine Zahl von 0 bis 10,
k eine Zahl von 0 bis 10 ist
oder
(d)
dem Rest R¹ entspricht,
mit der Maßgabe, dass im durchschnittlichen Molekül mindestens ein Rest R² die Bedeutung (a) hat,
a eine Zahl von 1 bis 500,
b eine Zahl von 0 bis 10
ist, zur Entschäumung wässriger Medien.

2. Verwendung wasserunlöslicher Organopolysiloxanderivate gemäß Anspruch 1, **dadurch gekennzeichnet, dass** b = 0 ist.

3. Verwendung wasserunlöslicher Organopolysiloxanderivate gemäß Anspruch 1, **dadurch gekennzeichnet, dass** R¹ Methylreste, a = 1 bis 50 und b = 0 ist.

4. Verwendung wasserunlöslicher Organopolysiloxanderivate gemäß Ansprüche 1 bis 3, **dadurch gekennzeichnet, dass** R³ Wasserstoff ist.

5. Verwendung wasserunlöslicher Organopolysiloxanderivate gemäß Ansprüche 1 bis 4, **dadurch gekennzeichnet, dass** R⁴ Wasserstoff oder ein Acylrest ist.

6. Verwendung wasserunlöslicher Organopolysiloxanderivate gemäß Ansprüche 1 bis 5, **dadurch gekennzeichnet, dass** der Index c = 1 oder 2 und d und e unabhängig voneinander 0 bis 10 sind.

7. Verwendung wasserunlöslicher Organopolysiloxanderivate gemäß Ansprüche 1 bis 6, **dadurch gekennzeichnet, dass** R⁶ Wasserstoff oder ein Methylrest, g = 3, h = 0 bis 12, i = 8 bis 30, j und k unabhängig voneinander < 5, insbesondere 0, sind.

8. Verwendung wasserunlöslicher Organopolysiloxanderivate gemäß Ansprüche 1 bis 7, **dadurch gekennzeichnet, dass** die Wasserlöslichkeit geringer als 20 g/l ist.

9. Entschäumeremulsionen, enthaltend neben Wasser und gegebenenfalls üblichen Hilfs- und Zusatzstoffen 5 bis 50 Gew.-% eine oder mehrere Verbindungen der allgemeinen Formel (I).

10. Verwendung wasserunlöslicher Organopolysiloxanderivate gemäß Ansprüche 1 bis 9 zur Entschäumung wässriger Tensidsysteme.

11. Verwendung wasserunlöslicher Organopolysiloxanderivate gemäß Ansprüche 1 bis 9 zur Entschäumung wässriger Lacke und Druckfarben.

12. Verwendung wasserunlöslicher Organopolysiloxanderivate gemäß Ansprüche 1 bis 9 zur Entschäumung wässriger Polymerdispersionen.

## Claims

1. Use of water-insoluble organopolysiloxane derivatives of the general formula (I) 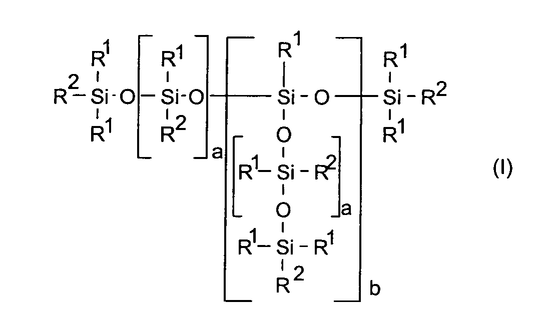 where the radicals
R¹ are alkyl radicals having 1 to 4 carbon atoms or aryl radicals, but at least 80% of the radicals R¹ are methyl radicals,
R² in the molecule are identical or different and can have the following definitions:
(a) 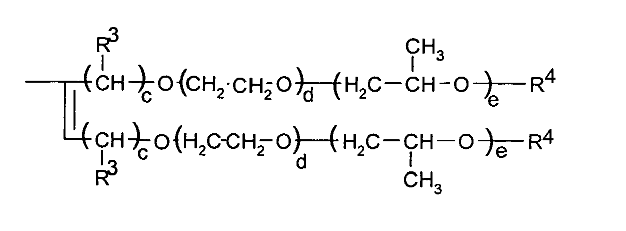 in which
R³ is a hydrogen or alkyl radical,
R⁴ is a hydrogen, alkyl or carboxyl radical,
c is a number from 1 to 20,
d is a number from 0 to 50,
e is a number from 0 to 50
or
(b)
-(CH₂-)_{f}OR⁵,
in which
R⁵ is a hydrogen, alkyl or carboxyl radical or a dimethylol propane radical containing ether groups if desired, and
f is a number from 2 to 20
or
c)
- (CH₂-)_{g}(OC₂H₄-)ₕ(OC₃H₆-)ᵢ(OC₄H₈)ⱼ(OCH₂CH(C₆H₅))ₖOR⁶
in which
R⁶ is a hydrogen, alkyl or carboxyl radical,
g is a number from 2 to 6,
h is a number from 0 to 20,
i is a number from 1 to 50,
j is a number from 0 to 10,
k is a number from 0 to 10
or
(d)
correspond to the radical R¹,
with the proviso that in the average molecule at least one radical R² has the definition (a),
a is a number from 1 to 500, and
b is a number from 0 to 10
for defoaming aqueous media.

2. Use of water-insoluble organopolysiloxane derivatives according to Claim 1, **characterized in that** b = 0.

3. Use of water-insoluble organopolysiloxane derivatives according to Claim 1, **characterized in that** radicals R¹ are methyl radicals, a = 1 to 50 and b = 0.

4. Use of water-insoluble organopolysiloxane derivatives according to Claims 1 to 3, **characterized in that** R³ is hydrogen.

5. Use of water-insoluble organopolysiloxane derivatives according to Claims 1 to 4, **characterized in that** R⁴ is hydrogen or an acyl radical.

6. Use of water-insoluble organopolysiloxane derivatives according to Claims 1 to 5, **characterized in that** the index c = 1 or 2 and d and e independently of one another are from 0 to 10.

7. Use of water-insoluble organopolysiloxane derivatives according to Claims 1 to 6, **characterized in that** R⁶ is hydrogen or a methyl radical, g = 3, h = 0 to 12, i = 8 to 30 and j and k independently of one another are < 5, in particular 0.

8. Use of water-insoluble organopolysiloxane derivatives according to Claims 1 to 7, **characterized in that** the water solubility is less than 20 g/l.

9. Defoamer emulsions comprising in addition to water and, if desired, customary auxiliaries and additives from 5 to 50% by weight of one or more compounds of the general formula (I).

10. Use of water-insoluble organopolysiloxane derivatives according to Claims 1 to 9 for defoaming aqueous surfactant systems.

11. Use of water-insoluble organopolysiloxane derivatives according to Claims 1 to 9 for defoaming aqueous coating materials and printing inks.

12. Use of water-insoluble organopolysiloxane derivatives according to Claims 1 to 9 for defoaming aqueous polymer dispersions.

## Revendications

1. Utilisation de dérivés d'organopolysiloxane insolubles dans l'eau de formule générale (I) 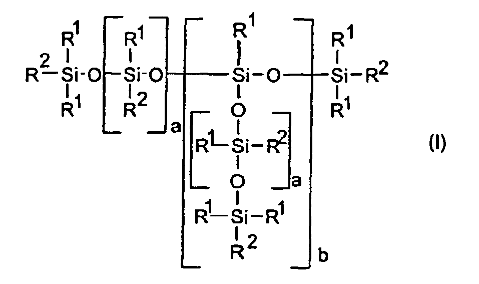 dans laquelle les radicaux
R¹ sont des radicaux alkyle comprenant 1 à 4 atomes de carbone ou des radicaux aryle, au moins 80% des radicaux R¹ étant toutefois des radicaux méthyle,
R² dans la molécule sont identiques ou différents et peuvent présenter les significations suivantes
(a) 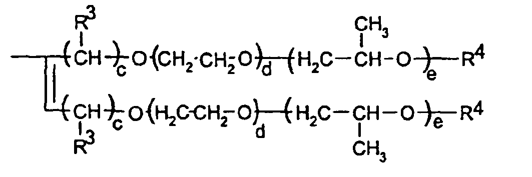 où
R³ représente un radical hydrogène ou alkyle,
R⁴ représente un radical hydrogène, alkyle ou carboxyle,
c vaut un nombre de 1 à 20,
d vaut un nombre de 0 à 50,
e vaut un nombre de 0 à 50,
ou
(b)
-(CH₂-)_{f}OR⁵,
où
R⁵ représente un radical hydrogène, alkyle, carboxyle ou diméthylolpropane contenant le cas échéant des groupements éther,
f vaut un nombre de 2 à 20,
ou
(c)
- (CH₂-)_{g}(OC₂H₄-)ₕ(OC₃H₆-)ᵢ(OC₄H₈)ⱼ(OCH₂CH(C₆H₅))ₖOR⁶
où
R⁶ représente un radical hydrogène, alkyle ou carboxyle, g vaut un nombre de 2 à 6,
h vaut un nombre de 0 à 20,
i vaut un nombre de 1 à 50,
j vaut un nombre de 0 à 10,
k vaut un nombre de 0 à 10,
ou
(d)
correspondent au radical R¹,
à condition que, dans la molécule moyenne, au moins un radical R² a la signification (a),
a vaut un nombre de 1 à 500,
b vaut un nombre de 0 à 10,
pour éliminer la mousse de milieux aqueux.

2. Utilisation de dérivés d'organopolysiloxane insolubles dans l'eau selon la revendication 1 **caractérisée en ce que** b = 0.

3. Utilisation de dérivés d'organopolysiloxane insolubles dans l'eau selon la revendication 1, **caractérisée en ce que** R¹ représente des radicaux méthyle, a = 1 à 50 et b = 0.

4. Utilisation de dérivés d'organopolysiloxane insolubles dans l'eau selon les revendications 1 à 3, **caractérisée en ce que** R³ représente hydrogène.

5. Utilisation de dérivés d'organopolysiloxane insolubles dans l'eau selon les revendications 1 à 4, **caractérisée en ce que** R⁴ représente hydrogène ou un radical acyle.

6. Utilisation de dérivés d'organopolysiloxane insolubles dans l'eau selon les revendications 1 à 5, **caractérisée en ce que** l'indice c = 1 ou 2 et d et e valent, indépendamment l'un de l'autre, 0 à 10.

7. Utilisation de dérivés d'organopolysiloxane insolubles dans l'eau selon les revendications 1 à 6, **caractérisée en ce que** l'indice R⁶ représente hydrogène ou un radical méthyle, g = 3, h = 0 à 12, i = 8 à 30, j et k valent, indépendamment l'un de l'autre, < 5, en particulier 0.

8. Utilisation de dérivés d'organopolysiloxane insolubles dans l'eau selon les revendications 1 à 7, **caractérisée en ce que** la solubilité dans l'eau est inférieure à 20 g/l.

9. Emulsions d'antimousse, contenant, outre de l'eau et le cas échéant des adjuvants et des additifs usuels, 5 à 50% en poids d'un ou de plusieurs composés de formule générale (I).

10. Utilisation de dérivés d'organopolysiloxane insolubles dans l'eau selon les revendications 1 à 9 pour éliminer la mousse de systèmes tensioactifs aqueux.

11. Utilisation de dérivés d'organopolysiloxane insolubles dans l'eau selon les revendications 1 à 9 pour éliminer la mousse de laques et d'encres d'imprimerie aqueuses.

12. Utilisation de dérivés d'organopolysiloxane insolubles dans l'eau selon les revendications 1 à 9 pour éliminer la mousse de dispersions aqueuses de polymères.
